# EUROPÄISCHE PATENTSCHRIFT

(11) **EP 3 826 577 B1**
(45) Veröffentlichungstag und Bekanntmachung des Hinweises auf die Patenterteilung: **06.09.2023**
(21) Anmeldenummer: 19737728.6
(22) Anmeldetag: 09.07.2019
(51) Int. Cl.: A61C 13/00, A61C 13/08, A61C 13/34

(54) **VERFAHREN ZUR HERSTELLUNG EINES DENTALBAUTEILS**
METHOD FOR PRODUCING A DENTAL COMPONENT
PROCÉDÉ POUR LA FABRICATION D'UN ÉLÉMENT DENTAIRE

(30) Priorität: 06.08.2018 DE 102018119079
(43) Veröffentlichungstag der Anmeldung: 02.06.2021
(73) Patentinhaber: Dekema Dental-Keramiköfen GmbH, 83395 Freilassing (DE)
(72) Erfinder: MILLER, Stephan, 83278 Traunstein (DE)
(74) Vertreter: Manitz Finsterwald Patent- und Rechtsanwaltspartnerschaft mbB
(86) Internationale Anmeldenummer: PCT/EP2019/068314
(87) Internationale Veröffentlichungsnummer: WO 2020/030359

(56) Entgegenhaltungen:
- WO-A1-2007/060142
- WO-A1-2018/038954
- DE-A1-102006 056 451
- US-A1- 2018 171 052

## Beschreibung

Die vorliegende Erfindung betrifft ein Verfahren zur Herstellung zumindest eines Dentalbauteils, insbesondere eines Zahnersatzes oder-teilersatzes.

Verfahren zur Herstellung von Dentalbauteilen sind grundsätzlich bekannt und umfassen meist mehrere aufwändige Einzelschritte, die größtenteils manuell durchgeführt werden. In einem ersten Schritt wird ein Gebissabdruck des betroffenen Patienten angefertigt. Mit Hilfe dieses Gebissabdruckes kann anschließend das Modell für das zu erzeugende Dentalbauteil gefertigt werden. Das Modell wird hierfür beispielsweise anhand eines - noch unbearbeiteten - Wachsrohlings händisch geformt. Der Wachsrohling kann sich durch eine dem Gebissabdruck angepasste Größe auszeichnen, wobei der Wachsrohling noch aufwändig bearbeitet und individuell an das Gebiss des Patienten angepasst wird. Es ist jedoch auch möglich, einen bereits geformten - für die bei dem Abdruck vorliegenden Verhältnisse zumindest in etwa geeigneten - Wachsrohling auszuwählen, welcher nur geringfügig oder gar nicht modifiziert werden muss. Das fertige Modell des Dentalbauteils wird anschließend händisch auf einem Grundkörper, einer sogenannten Säule, positioniert, um einen sog. Aufbau zu erzeugen. Die Säule besteht aus einem Material, welches zumindest hinsichtlich des Schmelzverhaltens ähnliche Eigenschaften wie das Material des Modells aufweist. Das Modell wird mitsamt der Säule in einer Einbettmasse eingebettet. Sobald die Einbettmasse ausgehärtet ist, werden das Modell und die Säule aus der Einbettmasse ausgebrannt. Hierfür wird die ausgehärtete Einbettmasse derart in einem Brennofen positioniert, dass das geschmolzene Modellmaterial aus der Einbettmasse herausfließen kann. Das Ergebnis des Prozesses ist eine Negativform des Modells und der Säule - also des Aufbaus - in der Einbettmasse.

Die Negativform wird anschließend mit einem Rohmaterial befüllt, aus dem das Dentalbauteil bestehen soll. Das Rohmaterial liegt beispielsweise in Pellet-Form vor. Es wird in den durch die Säule gebildeten Kanal der Negativform eingebracht. Das Rohmaterial wird durch ein geeignetes Verfahren und mit einer entsprechenden Vorrichtung innerhalb der Negativform aufgeschmolzen und - zumindest zeitweise - mit einer Presskraft beaufschlagt. Nach dem Aushärten des Bauteils muss die Negativform anschließend behutsam und meist sehr aufwendig entfernt werden, um das fertige Dentalbauteil unbeschädigt freizulegen.

Die Anfertigung des Dentalbauteils ist somit mit einem sehr hohen Arbeitsaufwand verbunden. Zusätzlich können durch die Vielzahl an benötigten Einzelschritten zur Fertigung des Dentalbauteils an vielen Stellen Fehler entstehen und Fehler fortgetragen werden.

Als Stand der Technik werden in diesem Zusammenhang die Dokumente WO 2007/060142 A1, WO 2018/038954 A1 und US 2018/171052 A1 genannt.

Es ist daher eine Aufgabe der vorliegenden Erfindung, ein Verfahren zur Herstellung eines Dentalbauteils sowie entsprechendes System zu schaffen, welches sich durch einen geringeren Arbeitsaufwand auszeichnet. Außerdem sollen die möglichen Fehlerquellen minimiert werden.

Diese Aufgabe wird durch ein Verfahren mit den Merkmalen des Anspruchs 1 sowie durch ein System mit den Merkmalen des Anspruchs 17 gelöst.

Das Verfahren umfasst folgende Schritte:
(i) additive Fertigung, insbesondere mittels 3D-Druck, eines Modells des Dentalbauteils aus einem Modellmaterial auf Basis eines virtuellen 3D-Modells des Dentalbauteils, wobei das Modell mit zumindest einem Grundkörper verbunden ist, welcher ausgebildet ist, um in einer Negativform einen Kanal zu formen, in welchem ein Presswerkzeug, insbesondere ein Stempel für einen Pressvorgang geführt werden kann, und wobei der Grundkörper und ein den Grundkörper und das Modell verbindender Verbindungskanal mittels des additiven Fertigungsverfahrens integral mit dem Modell gefertigt werden,
(ii) Einbetten des Modells in einer Einbettmasse,
(iii) Entfernen des Modells aus der Einbettmasse, insbesondere durch Erhitzen oder Ausbrennen, um eine Negativform des Modells zu erhalten,
(iv) Einbringen eines zur Herstellung des Dentalbauteils erforderlichen Rohmaterials in die Negativform,
(v) Erzeugen des Dentalbauteils in der Negativform,
(vi) Entfernen der Negativform.

Das erfindungsgemäße Verfahren zeichnet sich also dadurch aus, dass auf Basis eines virtuellen Modells ein physisches Modell mittels eines additiven Fertigungsverfahrens gefertigt wird.

Zur Herstellung eines Dentalbauteils wird - wie bereits erwähnt - ein physisches Modell benötigt, auf Basis dessen eine Negativform des gewünschten Dentalbauteils erstellt wird. Ein geeignetes Herstellungsverfahren für das physische Modell ist z.B. die Stereolithographie (z.B. Laser-Mikrostereolithographie). Das Modellmaterial ist dann insbesondere ein lichtaushärtender Kunststoff, der zunächst in der Form von flüssigen Basismonomeren vorliegt. Mittels Laserstrahlen werden schichtweise lokale Photopolymerisationsereignisse bewirkt, die zusammen die gewünschte Struktur ergeben. Andere 3D-Druckverfahren können jedoch auch zum Einsatz gelangen.

Durch die additive Fertigung kann der Prozess zumindest teilweise automatisiert werden. Menschliche Fehler bei der Bearbeitung des Modells werden hierdurch verringert. Zudem können mit Hilfe der additiven Fertigung auf reproduzierbare Weise Feinheiten in der Struktur des Dentalbauteils erzeugt werden, was bei einer händischen Anfertigung des Modells nur bedingt möglich ist.

Zusätzlich können durch die Fertigung des physischen Modells mittels additiver Fertigung, beziehungsweise 3D-Druck, erhebliche Kosten eingespart werden, da zum einen keine Lager- bzw. Vorhaltekosten für Modellrohlinge anfallen, zum anderen können Materialkosten eingespart werden, da die additive Fertigung - wie der Name schon sagt - ein aufbauendes Verfahren ist und daher nicht wie bei einer Nachbearbeitung eines Modellrohlings überschüssiges Material mittels eines abtragenden Verfahren abgetragen und entsorgt werden muss.

Da additive Fertigungsverfahren inzwischen vergleichsweise kostengünstig sind, können nicht nur das physische Modell sondern auch Hilfsstrukturen, wie etwa Strukturelemente, die die Modelle tragen, und/oder Grundplatten, auf denen die Modelle zum Einbetten platziert werden, gedruckt werden. Es ist möglich, die einzelnen Komponenten separat oder gemeinsam - also in einem Stück - zu drucken. Bei einer separaten Fertigung müssen die Komponenten miteinander verbunden werden. Mechanische Kodierungen und/oder Markierungen, die bevorzugt beim Drucken der Komponenten erzeugt werden, erleichtern ein lagegenaues Zusammenfügen der einzelnen Teile.

Das gefertigte Modell wird in eine Einbettmasse eingebettet. Zum Einbetten stehen einige bereits bekannte Verfahren zur Auswahl.

Um eine Negativform des Modells zu erhalten, wird das Modell aus der Einbettmasse entfernt. Vorzugsweise wird das Modell durch eine erhöhte Temperatur aufgeschmolzen oder rückstandslos ausgebrannt. Das aufgeschmolzene Material bzw. die Verbrennungsprodukte des Materials kann/können beispielsweise durch einen geeigneten Kanal abfließen bzw. entweichen.

Anschließend wird das Rohmaterial zur Erzeugung des Dentalbauteils in die Negativform eingebracht. Besonders vorteilhaft ist es, wenn hierbei der vorstehend genannte Kanal zur Entfernung des Modellmaterials verwendet wird.

Das Dentalbauteil wird in der Negativform erzeugt und liegt in dieser nach dem Aushärten des Rohmaterials vor.

Um das Dentalbauteil freizulegen, wird die Negativform abschließend entfernt.

Vorteilhafte Ausführungsformen der Erfindung sind auch in den Ansprüchen, der nachfolgenden Beschreibung sowie den Figuren angegeben.

Gemäß einer Ausführungsform wird zumindest ein Teil von zur Erstellung des virtuellen Modells erforderlichen Daten mittels intraoralem Scannen eines Gebisses eines Patienten oder eines Teils davon erfasst.

Bevorzugt wird zumindest ein Teil von zur Erstellung des virtuellen Modells erforderlichen Daten mittels Scannen eines Negativabdrucks eines Gebisses eines Patienten oder eines Teils davon erfasst. Es ist auch möglich, auf Basis des Negativabdrucks ein positives Modell zu fertigen, das dann gescannt wird.

Es kann vorgesehen sein, dass zumindest ein Teil von zur Erstellung des virtuellen Modells erforderlichen Daten aus einer Datenbank entnommen wird.

Die virtuellen Daten des Gebisses des Patienten ermöglichen es, das zu erzeugende Bauteil virtuell zu planen, z.B. mittels eines geeigneten Computerprogramms. Das Ergebnis dieser Planung ist dann ein virtuelles Modell des zu erzeugenden Dentalbauteils oder eines Aufbaus der dieses Dentalbauteil enthält. Bevorzugt enthält es auch Daten zur Art und/oder zu den Eigenschaften des Rohmaterials, aus dem das Bauteil gefertigt werden soll.

Gemäß der Erfindung ist das Modell mit zumindest einem Grundkörper, der insbesondere aus dem Modellmaterial gefertigt ist, verbunden, welcher in der Negativform einen Kanal formt, in welchem ein Presswerkzeug, insbesondere ein Stempel für einen Pressvorgang geführt werden kann. Durch diesen kann das Rohmaterial der Negativform zugeführt werden. Der Kanal kann auch zur Entfernung des Modellmaterials dienen.

Durch eine geeignete Ausgestaltung des Kanals, beispielsweise als geradliniger Kanal mit kreisförmigem Querschnitt, kann das Presswerkzeug (z.B. ein zylinderförmiger Stempel) geführt bewegt werden.

Des Weiteren wird die Zufuhr des Rohmaterials durch den Kanal vereinfacht. Das Rohmaterial kann dadurch nicht nur im flüssigen oder pulverisierten Zustand eingebracht werden, es ist ebenfalls möglich, dass das Rohmaterial beispielsweise in Pelletform vorliegt. Der Durchmesser beziehungsweise die Abmaße der Rohmaterial-Pellets können an die Größe bzw. den Durchmessers des Kanals angepasst sein. Beispielsweise sind die Durchmesser der verwendeten Pellets, des Kanals und des Pressstempels im Wesentlichen gleich, um eine bestmögliche Presskraft-übertragung zu ermöglichen. Idealerweise wurden die Pellets jeweils an den Rohmaterialbedarf des zu erzeugenden Dentalbauteils angepasst.

Bevorzugt ist der Grundkörper aus dem Modellmaterial gefertigt. Aufgrund der aus der Materialwahl folgenden selben Materialeigenschaften kann der Grundkörper zusammen, insbesondere gleichzeitig, mit dem Modell aus der Einbettmasse entfernt werden. Die Parameter für beispielsweise ein Ausbrennen müssen dementsprechend nicht zusätzlich an den Grundkörper angepasst werden, da sie den Parametern für die Entfernung des Modells entsprechen.

Des Weiteren ist vorgesehen, dass der Grundkörper und ein den Grundkörper und das Modell verbindender Verbindungskanal mittels des additiven Fertigungsverfahrens integral mit dem Modell gefertigt werden.

Durch die integrale Fertigung kann der Arbeitsschritt einer Anbringung des Modells auf dem Grundkörper eingespart werden. Der Verbindungskanal ist dem Modell letztlich eine Art Steg, der in der Negativform einen Kanal bildet.

Gemäß einer weiteren Ausführungsform des Verfahrens kann es vorgesehen sein, eine Grundplatte zur Aufnahme des Modells und/oder - falls vorhanden - des Grundkörpers mittels des additiven Fertigungsverfahrens integral mit dem Modell und/oder dem Grundkörper zu fertigen. Denkbar ist auch, dass zumindest ein Abschnitt eines zum Einbetten des Modells vorgesehenen Einbettgehäuseteils (z.B. eine Art hohlzylinderförmige Hülse) mittels eines additiven Fertigungsverfahrens integral mit einer Grundplatte - mit oder ohne Modell und/oder Grundkörper - zu fertigen. Beispielsweise ist es möglich, das Modell und/oder den Grundkörper separat von einer integral gefertigten Grundplatte/Einbettgehäuse-Kombination zu fertigen. Gemäß einer Verfahrensvariante werden alle Komponenten - also das Modell, der Grundköper (falls vorhanden), die Grundplatte und das Einbettgehäuseteil - gemeinsam integral gefertigt. Eine andere Variante sieht vor, dass nur der Grundkörper, das Einbettgehäuse und der Grundkörper gemeinsam gefertigt werden. In diesem Fall wird das Modell separat additiv gefertigt, beispielsweise mittels eines besonders präzisen 3D-Druckers, der für die Herstellung der anderen Komponenten nicht erforderlich ist. Das Modell wird dann in der vorbestimmten Position an dem Grundkörper oder der Grundplatte befestigt. Zur Vereinfachung der Positionierung können Orientierungsmarken an den separat hergestellten Komponenten vorgesehen sein, z.B. indem sie beim additiven Fertigen mit erzeugt werden.

Es kann auch vorgesehen sein, dass das Modell vor dem Einbetten an dem Grundkörper befestigt wird, insbesondere mit Hilfe des Modellmaterials, bevorzugt unter Bildung eines den Grundkörper und das Modell verbindenden Verbindungskanals.

Gemäß einer weiteren, besonders effizienten Ausführungsform des Verfahrens werden mehrere Modelle mehrerer Dentalbauteile gemeinsam additiv gefertigt.

Ist es vorgesehen mehrere Modelle gleichzeitig zu drucken, so können diese im virtuellen Modell derart angeordnet werden, dass eine optimierte und effiziente additive Fertigung aller Modelle gemeinsam möglich ist. Diese optimierte Anordnung kann automatisch auf Basis der virtuellen Modelle berechnet werden.

Die Modelle werden anschließend gemeinsam in die Einbettmasse eingebettet, wobei auch deren räumliche Anordnung in der Einbettmasse auf Basis der virtuellen Modelle der Dentalbauteile automatisch geplant und/oder vorgeschlagen wird.

Gemäß einer weiteren Ausgestaltung wird die Negativform mit Hilfe zumindest eines abtragenden Fertigungsverfahrens entfernt.

Bevorzugt umfasst das abtragende Fertigungsverfahren Luftdruckstrahlen und/oder Wasserstrahlen und/oder Fräsen.

Gemäß einer weiteren Ausgestaltung wird das Dentalbauteil zumindest teilweise manuell aus der Negativform gelöst.

Hierbei ist es besonders bevorzugt, wenn ein Teil der Einbettmasse entfernt wird, der am weitesten von dem erzeugten Dentalbauteil entfernt ist. Nach dem manuellen Entfernen eines Teils der Einbettmasse, kann die restliche Einbettmasse automatisiert abgetragen werden. Es ist selbstverständlich, dass das manuelle und das automatisierte Abtragen auch vertauscht werden kann, so dass zuerst der vom erzeugten Dentalbauteil entfernte Teil der Einbettmasse automatisiert entfernt wird und anschließend das Dentalbauteil manuell ausgebettet wird.

Bevorzugt wird das Dentalbauteil zumindest teilweise automatisiert aus der Negativform gelöst.

Das automatisierte Herauslösen kann insbesondere durch ein automatisiertes abtragendes Fertigungsverfahren ermöglicht werden. Das abtragende Fertigungsverfahren kann derart ausgestaltet sein, dass eine Abtragegeschwindigkeit an die Position des erzeugten Dentalbauteils innerhalb der Einbettmasse angepasst ist. Beispielsweise wird, je weiter entfernt das Dentalbauteil von der aktuellen Abtrageposition ist, eine desto höhere Abtragegeschwindigkeit gewählt. In der Nähe des Dentalbauteils sinkt dementsprechend die Abtragegeschwindigkeit. Hierdurch wird ein schonendes und dennoch effizientes Ausbetten des Dentalbauteils ermöglicht. Beim Ausbetten können die Art und/oder die Eigenschaften des Einbettmaterials berücksichtigt werden, insbesondere automatisch.

Um das Ausbetten zu beschleunigen, kann ein ganzes Segment der Einbettmasse, bei dem aufgrund des virtuellen Modells bekannt ist, dass sich darin kein Dentalbauteil befindet, abgeschnitten werden.

Des Weiteren kann vorgesehen sein, dass das Modellmaterial ein rückstandslos verbrennbares Material ist, insbesondere ein Kunststoff, und/oder dass das Modellmaterial ein lichtaushärtender Kunststoff ist.

Das Modellmaterial kann einen Schmelz-, Siede- oder Sublimationspunkt im Bereich von oberhalb der Raumtemperatur bis 900°C aufweisen.

Es kann vorgesehen sein, dass die Einbettmasse Gips und/oder ein gipsartiges Material umfasst und/oder phosphatgebunden und/oder ethylsilikatgebunden ist.

Gemäß einer weiteren Ausführungsform erfolgt das Erzeugen des Dentalbauteils unter Aufbringen einer Presskraft, insbesondere unter Aufbringung einer Presskraft von 10 N bis 1000 N, und/oder in einem Temperaturbereich von 100°C bis 1200°C erfolgt. Ein Brennen des Dentalbauteils unter konstanter oder zeitlich variabler Presskraftbeaufschlagung sorgt für besonders gute Ergebnisse, unter anderem auch, weil dadurch zum einen ein vollständiges und gleichmäßiges Ausfüllen der Negativform durch das Rohmaterial erzielt wird. Zum anderen wird die Bildung von Poren innerhalb des Dentalbauteils möglichst gering gehalten.

Ein erfindungsgemäßes System zur Herstellung eines Dentalbauteils, insbesondere eines Zahnersatzes oder eines -teilersatzes umfasst eine Modellherstellungsvorrichtung zur additiven Fertigung eines Modells auf Basis eines virtuellen Modells und eine Steuerungseinrichtung, wobei die Modellherstellungsvorrichtung mit der Steuerungseinrichtung verbindbar oder verbunden ist, um Steuerdaten von der Steuerungseinrichtung zu empfangen. Die Modellherstellungsvorrichtung ist beispielsweise ein 3D-Drucker, der nach dem Prinzip der Stereolithographie, insbesondere der Laser-Mikrostereolithographie arbeit.

Alternativ können die Steuerdaten auch in der Modellherstellungsvorrichtung auf Basis der Daten des virtuellen Modells automatisch generiert werden, bei Bedarf unterstützt durch das Bedienpersonal (semi-automatische Steuerdatengenerierung, z.B. schlägt die Steuerungseinrichtung ein Steuerdatenprogramm vor, das bei Bedarf manuell angepasst wird).

Gemäß einer möglichen Ausgestaltung des Systems umfasst das System zusätzlich einen programmierbaren Dentalbrennofen, wobei der programmierbare Dentalbrennofen mit der Steuerungseinrichtung verbindbar oder verbunden ist, insbesondere wobei die Steuerungseinrichtung dazu ausgebildet und eingerichtet ist, um auf Basis des virtuellen Modells des Dentalbauteils automatisch ein Programm zum Betrieb des Dentalbrennofens zu wählen und/oder automatisch ein solches Programm zu erstellen und/oder automatisch ein solches Programm vorzuschlagen, insbesondere wobei die Steuerungseinrichtung zur direkten oder indirekten Steuerung des Dentalbrennofens ausgebildet und eingerichtet ist.

Auf Basis des virtuellen Modells wird automatisch - also ohne Zutun eines Bedienpersonals - ein Programm erstellt oder gewählt, das den Betrieb des Brennofens steuert und/oder regelt. Das Programm kann unmittelbar zum Einsatz gelangen oder es wird dem Bedienpersonal vorgeschlagen, das die Verwendung des Programms autorisieren muss. Es ist auch vorstellbar, dass das vorgeschlagene Programm von dem Bedienpersonal modifiziert werden kann, bevor es gestartet wird. Die Art und/oder die Eigenschaften des verwendeten Rohmaterials können bei der Programmwahl und/oder -erstellung berücksichtigt werden, insbesondere automatisch.

Da das virtuelle Modell bekannt ist, können das Volumen und/oder die Geometrie des Dentalbauteils und/oder andere charakteristische Parameter des Dentalbauteils, bei der Wahl oder Erstellung des den Brennofen steuernden/regelnden Programms berücksichtigt werden, um optimale Brennergebnisse sicherzustellen und gleichzeitig auch ökonomischen Gesichtspunkten Rechnung zu tragen. Eine Berücksichtigung der Eigenschaften des zu erzeugenden Dentalbauteils ermöglicht es beispielsweise, ein Brennprogramm zu generieren oder zu wählen, dass so lang wie nötig aber so kurz wie möglich dauert.

Die Daten des virtuellen Modells werden genutzt, um ein geeignetes Programm aus einer in dem Brennofen oder einer in einer externen Datenbank hinterlegten Programmbibliothek zu wählen. Es ist ebenfalls möglich, dass ein einer Bibliothek entnommenes Programm unter Berücksichtigung des virtuellen Modells angepasst oder modifiziert wird oder dass auf Basis des virtuellen Modells ein individuelles Programm geschaffen wird. Beispielsweise werden dafür charakteristische Parameter des virtuellen Modells in geeignete Algorithmen eingespeist. Ein geeignetes Programm umfasst beispielsweise zumindest einen, insbesondere eine Mehrzahl von konstanten oder zeitlich variablen Betriebsparametern des Ofens und/oder Funktionen des oder der Betriebsparameter in Abhängigkeit der Zeit.

Bevorzugt weist der Dentalbrennofen eine Presseinrichtung auf, mittels der das Rohmaterial unter Aufbringen einer Presskraft in die Negativform einbringbar ist und/oder mittels derer das Dentalbauteil unter Presskraftbeaufschlagung erzeugbar ist. Grundsätzlich können der gesamte Brennvorgang oder zumindest Teile davon unter Presskraftbeaufschlagung erfolgen.

Gemäß einer möglichen Ausgestaltung des Systems umfasst das System zusätzlich eine Rohdatenerfassungseinrichtung, insbesondere einen optischen Scanner, zum intraoralen Scannen eines Gebisses eines Patienten oder eines Teils davon und/oder zum Scannen eines Negativabdrucks eines Gebisses eines Patienten oder eines Teils davon und/oder zum Scannen eines physischen Modells des Dentalbauteils.

Gemäß einer weiteren Ausführungsform des Systems ist die Steuerungseinrichtung dazu ausgebildet und eingerichtet, das virtuelle Modell zu empfangen und/oder das virtuelle Modell auf Basis von Daten zumindest eines Scans zu erstellen.

Gemäß einer weiteren Ausgestaltung des Systems umfasst das System zusätzlich einen programmierbaren Ofen zum Entfernen des Models aus der Einbettmasse, wobei der Ofen mit der Steuerungseinrichtung verbindbar oder verbunden ist, um Steuerdaten von der Steuerungseinrichtung zu empfangen, insbesondere wobei die Steuerungseinrichtung dazu ausgebildet und eingerichtet ist, auf Basis eines virtuellen Modells des Dentalbauteils automatisch zumindest einen Prozessparameter zum Betrieb des Ofens zu wählen und/oder automatisch einen solchen Prozessparameter zu erstellen und/oder automatisch einen solchen Prozessparameter vorzuschlagen. Die Art und/oder die Eigenschaften des verwendeten Modellmaterials können bei der Wahl und/oder dem Erstellen des Parameters berücksichtigt werden, insbesondere automatisch.

Gemäß einer weiteren Ausführungsform umfasst das System zusätzlich eine Ausbetteinrichtung zum zumindest teilweise automatisierten Entfernen des Dentalbauteils aus der Negativform auf Basis eines virtuellen Modells, wobei die Ausbetteinrichtung mit der Steuerungseinrichtung verbindbar oder verbunden ist, um Steuerdaten von der Steuerungseinrichtung zu empfangen, insbesondere wobei die Ausbetteinrichtung mittels eines abtragenden Fertigungsverfahrens arbeitet, wie etwa Luftdruckstrahlen und/oder Wasserstrahlen und/oder Fräsen.

Gemäß noch einer weiteren Ausgestaltung weisen die Scan-Vorrichtung und/oder die Modellherstellungsvorrichtung und/oder der programmierbare Ofen und/oder der Dentalbrennofen und/oder die Ausbetteinrichtung eine von der Steuerungseinrichtung separate Steuereinheit auf, die mit der Steuerungseinrichtung verbindbar und/oder verbunden ist, insbesondere wobei die Steuerungseinrichtung eine übergeordnete Steuerung bereitstellt.

Nachfolgend werden das erfindungsmäßige Verfahren und das erfindungsgemäße System rein beispielhaft anhand einer vorteilhaften Ausführungsform unter Bezugnahme auf die beigefügten Figuren beschrieben. Es zeigen:
- Fig. 1: ein intraorales Scannen eines Gebisses eines Patienten;
- Fig. 2: ein Erstellen eines auf das Gebiss des Patienten angepassten virtuellen Modells eines Dentalbauteils mit Hilfe eines computerbasierten Programms;
- Fig. 3: eine Positionierung virtueller Grundkörper mit Hilfe des Programms;
- Fig. 4: eine Positionierung der virtuellen Modelle auf den virtuellen Grundkörpern mit Hilfe des Programms;
- Fig. 5: eine Erzeugung eines virtuellen Aufbaus auf Basis der virtuellen Modelle mit Hilfe des Programms;
- Fig. 6: einen physischer Aufbau, der auf Basis des virtuellen Aufbaus erzeugt wurde;
- Fig. 7: ein Einbetten des physischen Aufbaus in eine Einbettmasse zur Erzeugung eines Einbettkörpers;
- Fig. 8: ein Ausbrennen des physischen Aufbaus aus dem Einbettkörper zur Erzeugung einer Negativform;
- Fig. 9: ein Einbringen eines zur Erzeugung der Dentalbauteile erforderlichen Rohmaterials und von Pressstempeln in die Negativform;
- Fig. 10: ein Ausbetten des Dentalbauteils mit Hilfe einer Ausbetteinrichtung und
- Fig. 11: eine Ausführungsform des erfindungsgemäßen Systems.

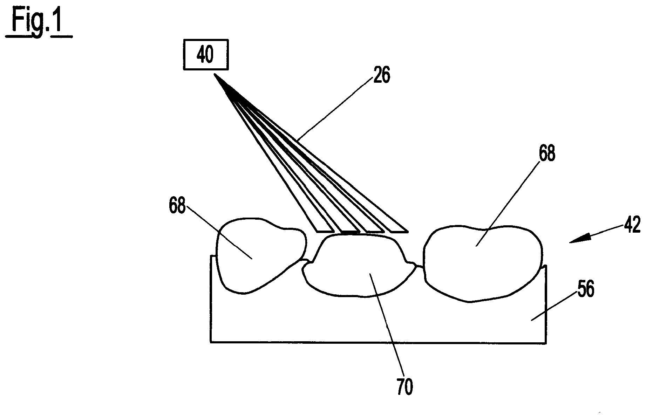

Die Fig. 1 bis 10 zeigen die einzelnen Schritte einer Ausführungsform des erfindungsgemäßen Verfahrens.

In Fig. 1 ist ein erster Schritt des erfindungsgemäßen Verfahrens schematisch dargestellt. Ein Teil eines Gebisses 42 eines Patienten wird mit Hilfe einer Scan-Vorrichtung 40 intraoral gescannt (angedeutet mit dem Bezugszeichen 26). Der Teil des Gebisses 42 weist das Zahnfleisch 56 des Gebisses, zwei mangelfreie Zähne 68 und einen einen Zahnteilersatz benötigenden mangelhaften Zahn 70 auf. Grundsätzlich ist es auch denkbar, dass ein (negativer) Abdruck des Gebisses 42 angefertigt wird. Dieser Abdruck kann dann gescannt werden. Es ist aber auch möglich, mithilfe des Abdrucks ein (positives) physisches Modell des Gebisses 42 zu fertigen, das dann gescannt wird.

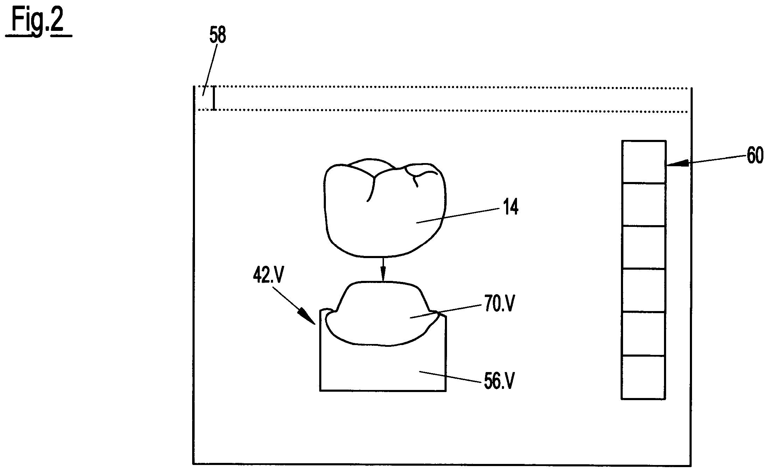

Die Scan-Daten bilden die Grundlage für ein virtuelles Modells 42.V des gescannten Teils des Gebisses 42 (siehe Fig. 2).

Die Fig. 2 bis Fig. 5 zeigen eine grafische Benutzeroberfläche 58 eines computerbasierten Programms zur virtuellen Bearbeitung des virtuellen Modells 42.V, wobei die grafische Benutzeroberfläche 58 eine Symbolleiste 60 aufweist, mit Hilfe derer verschiedene Werkzeuge zur Erstellung und Bearbeitung eines virtuellen Modells 14 eines zur Rekonstruktion des mangelhaften Zahns 70 vorgesehenen Dentalbauteils ausgewählt werden können.

In Fig. 2 ist das virtuelle Modell 14 dieses Zahnteilersatzes dargestellt, welches an das vorher erstellte virtuelle Gebiss 42.V angepasst ist. Das virtuelle Gebiss 42.V umfasst ein virtuelles Zahnfleisch 56.V und einen virtuellen, mangelhaften Zahn 70.V. Das virtuelle Gebiss 42.V basiert beispielsweise auf dem zuvor durchgeführten intraoralen Scan 26. Mit Hilfe des computerbasierten Programms kann das virtuelle Modell 14 derart für den mangelhaften Zahn 70 angepasst werden, dass das Gebiss 42 des Patienten mit einem auf dem virtuellen Modell 14 basierten Dentalbauteil 10 instand gebracht werden kann. Das virtuelle Modell 14 kann beispielsweise automatisch oder manuell einer Datenbank mit einer Vielzahl von Standardmodellen entnommen werden. Bei Bedarf kann das gewählte Standardmodell an die jeweils vorliegende Situation angepasst werden, um eine aus zahntechnischer Sicht optimiertes virtuelles Modell 14 zu schaffen. Mit anderen Worten: Die Anpassung kann automatisch, semi-automatisch (z.B. manuelle Anpassung eines Grundmodells oder Standardmodells) oder manuell erfolgen.

Grundsätzlich kann nun mit der Erstellung eines physischen Modells des virtuellen Modells 14 begonnen werden. Häufig werden jedoch gleich mehrere physische Modelle zur gleichzeitigen Herstellung mehrerer Dentalbauteile für verschiedene Patienten erzeugt, um Kosten zu sparen.

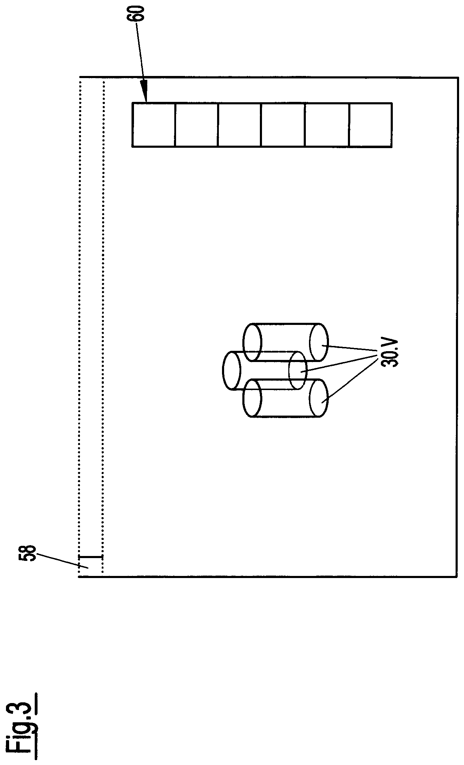

Für das nachfolgend noch beschriebene Einbetten des physischen Modells ist es vorteilhaft, wenn es auf einer Art Sockel oder einem Grundkörper angeordnet ist. Auch dies lässt sich mit Hilfe des Programms planen. Das Programm kann z.B. automatisch ermitteln, wie mehrere physische Modelle möglichst vorteilhaft räumlich angeordnet werden, um mit einem Verfahrensdurchlauf möglichst viele Dentalbauteile gleichzeitig herstellen zu können (diese Planung kann auch manuell oder manuell unterstützt erfolgen). Dazu sind unter Umständen mehrere Grundkörper erforderlich. Im vorliegenden Beispiel schlägt das Programm eine Anordnung von drei Grundkörpern (virtuelle Grundkörper 30.V) vor (siehe Fig. 3). Die Anordnung der Grundkörper 30.V kann auch durch apparative Rahmenbedingungen vorgegeben sein, z.B. durch eine Konfiguration des Brennofens und/oder eine Ausgestaltung einer Pressvorrichtung des Ofens. Die virtuellen Grundkörper 30.V können durch virtuelle Stege (nicht gezeigt) miteinander verbunden sein.

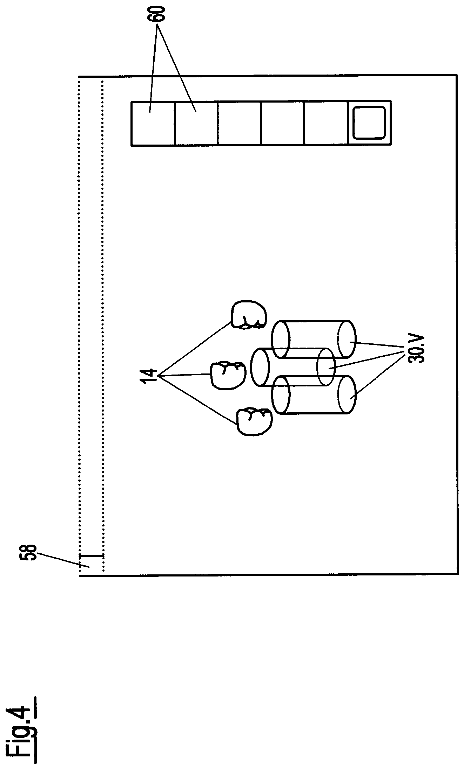

In dem in Fig. 4 gezeigten nächsten Schritt werden drei virtuelle Modelle 14 derart über den drei virtuellen Grundkörpern 30.V angeordnet, dass die virtuellen Modelle zwar nah bei den virtuellen Grundkörpern 30.V liegen, es jedoch noch keinerlei Berührungspunkte gibt.

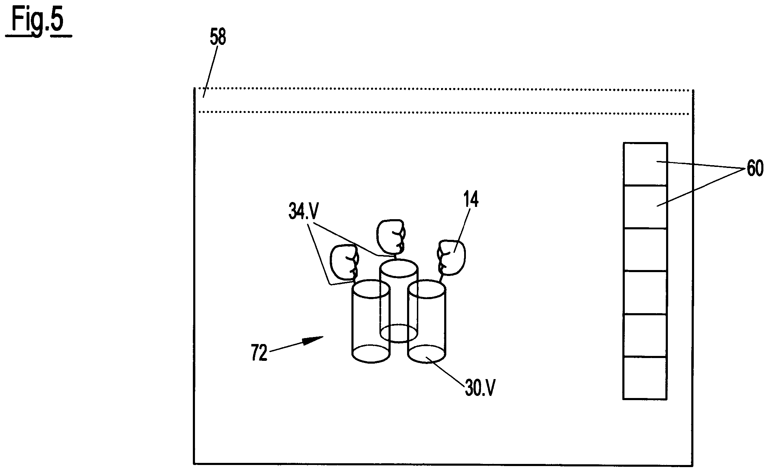

Fig. 5 stellt einen Planungsschritt dar, in welchem zwischen den virtuellen Grundkörpern 30.V und den virtuellen Modellen 14 virtuelle Verbindungsstege 34.V eingefügt werden (automatisch, manuell oder teilmanuell). Die Verbindungstege 34.V verbinden die virtuellen Grundkörper 30.V mit den virtuellen Modellen 14. Damit wurde ein virtueller Aufbau 72 geschaffen, mit dessen Hilfe ein physischer Aufbau erzeugt werden erzeugt werden kann, der die Basis zur Erstellung einer geeigneten Negativform bildet.

Es versteht sich, dass die virtuelle Erzeugung und Bearbeitung des Aufbaus 72 grundsätzlich automatisch erfolgen kann. Bevorzugt besteht jedoch die Möglichkeit, dass ein Bedienpersonal in allen Planungsschritten bedarfsgerecht Anpassungen vornehmen kann.

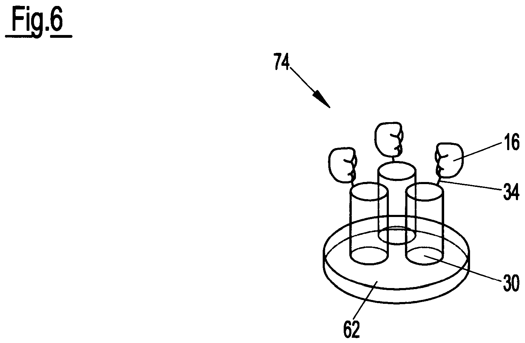

Fig. 6 zeigt einen physischen Aufbau 74 der auf Basis des in den Fig. 2 bis 5 virtuell gestalteten Aufbaus 72 gefertigt wurde. Der Aufbau 74 weist drei physische Modelle 16 auf, die jeweils ein physisches Abbild des entsprechenden virtuellen Modells 14 sind und die jeweils über zumindest einen Verbindungssteg 34 mit jeweils zumindest einem Grundkörper 30 verbunden sind. Grundsätzlich können auch Verbindungsstege zwischen den Modellen 16 und den Grundkörpern 30 vorgesehen sein. Diese können nachträglich manuell eingefügt werden oder schon bei der virtuellen Planung berücksichtigt werden.

Der Aufbau 74 kann auf Basis des zuvor erstellten virtuellen Aufbaus 72 mittels eines additiven Fertigungsverfahrens hergestellt werden, insbesondere mittels 3D-Druck. Es ist jedoch auch möglich, den Aufbau 74 oder einzelne Teile davon auf eine andere Weise - insbesondere durch ein abtragendes Verfahren, beispielsweise mittels Fräsen - zu fertigen und/oder den Aufbau 74 nachzubearbeiten, insbesondere manuell.

Bei einer Fertigung des Aufbaus 74 mittels 3D-Druck, ist es vorteilhaft, wenn alle drei Grundbestandteile - Modelle 16, Grundkörper 30 und Verbindungsstege 34 - aus demselben Modellmaterial (z.B. ein wachsartiges Material und/oder Kunststoff) gefertigt sind. Wurden die drei Bestandteile nur teilweise gemeinsam oder gar in einzelnen Schritten mit unterschiedlichen Methoden gefertigt, so weisen die drei Bestandteile vorzugsweise ebenfalls das gleiche oder zumindest ein ähnliches Material auf. Vorzugsweise weisen die verwendeten Materialien ein ähnliches Schmelzverhalten auf. Insbesondere ist das Modellmaterial rückstandlos verbrennbar. Vorzugsweise weist das Material einen Schmelz-, Siede- bzw. Sublimationspunkt in einem Bereich von oberhalb der Raumtemperatur bis 900°C auf.

Ein besonders geeignetes 3D-Druckverfahren ist beispielsweise die Stereolithographie, bei der ein lichtaushärtender Kunststoff zum Einsatz gelangt.

Der gefertigte Aufbau 74 wird in einer wohldefinierten Position und Ausrichtung auf einer Grundplatte 62 positioniert und vorzugsweise dort fixiert. Er kann auch direkt auf der Grundplatte 62 hergestellt (z.B. gedruckt) werden. Es ist auch möglich, die Grundplatte 62 ebenfalls zu drucken. Beispielsweise werden die Platte 62 und der Aufbau 74 gemeinsam gedruckt.

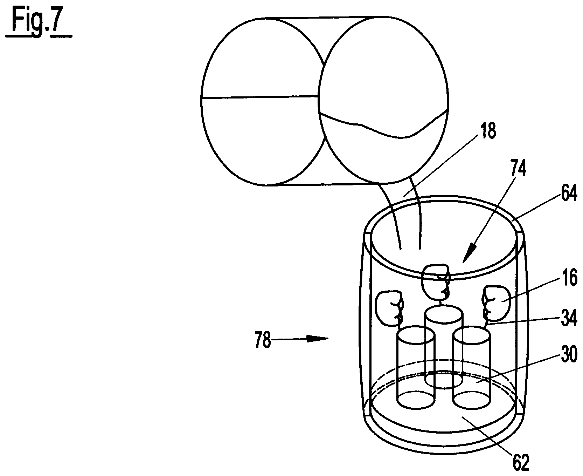

Wie in Fig. 7 gezeigt ist, wird auf die Grundplatte 62 eine Manschette 64 aufgesetzt, so dass sie den Aufbau 74 umgibt und beispielsweise mittels einer Steckverbindung an der Platte 62 befestigt ist. Die Manschette 64 bildet mit der Grundplatte 62 einen becherartigen Zylinder 78, der einseitig offen ist. In den Innenraum des Zylinders 78 wird nun eine geeignete Einbettmasse 18 eingebracht. Sie kann auch zusammen mit der Grundplatte G2 gedruckt werden, wodurch das Verfahren weiter vereinfacht wird. Die Einbettmasse 18 kann ein gipsartiges Material sein und/oder phosphatgebunden und/oder ethylsilikatgebunden sein.

Nach dem Aushärten der Einbettmasse 18 werden die Manschette 64 und die Grundplatte 62 entfernt. Dies kann insbesondere dadurch begünstigt werden, dass die Innenseiten der Manschette 64 und der Grundplatte 62 vor dem Zusammensetzen mit einem Trennmittel benetzt werden und/oder eine entsprechende Oberflächenbeschichtung aufweisen.

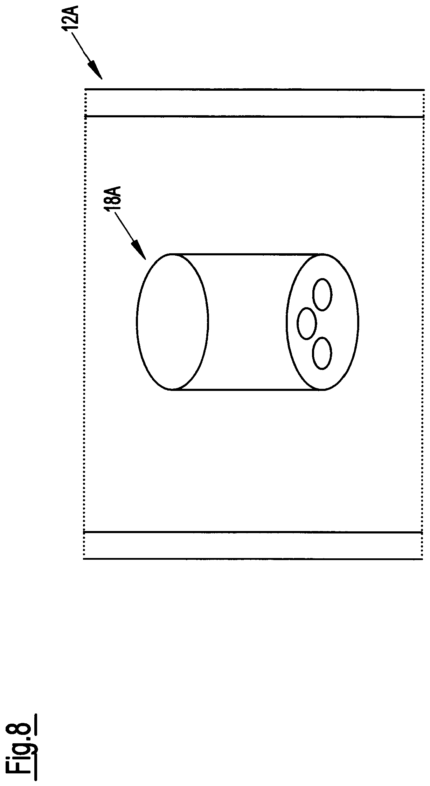

Fig. 8 zeigt einen weiteren Schritt bei der Fertigung eines Dentalbauteils. Die ausgehärtete Einbettmasse 18 bildet einen Einbettkörper 18A, der nun in einen programmierbaren Ausbrennofen 12A eingebracht wird. Der Einbettkörper 18A wird derart positioniert, dass die von der Grundplatte 62 gebildete Stirnseite 84 der zylinderförmigen, ausgehärteten Einbettmasse 18 nach unten zeigt.

Die Prozessparameter zum Betrieb des Ausbrennofens 12A können automatisch, manuell oder teilmanuell auf Basis des virtuellen Modells 14, der virtuellen Bestandteile 30.V, 34.V (siehe Fig. 2 bis 5) und/oder des gesamten virtuellen Aufbaus 72 gewählt werden. Ziel ist es, dass die Modelle 16, die Verbindungsstege 34 und die Grundkörper 30 durch Ausbrennen aus der ausgehärteten Einbettmasse 18 möglich effizient und vollständig entfernt werden. Zu diesem Zweck werden geeignete Prozessparameter, wie eine Maximaltemperatur, ein Temperaturverlauf und/oder eine Brenndauer gewählt, um das Material der vorstehend genannten Komponenten aufzuschmelzen und/oder rückstandslos abzubrennen, ohne den Einbettkörper zu schädigen. Das aufgeschmolzene Material bzw. die Verbrennungsprodukte des Materials kann/können aus dem Körper 18A ausfließen bzw. entweichen.

Die genannten Prozessparameter können selbstverständlich auch einer Datenbank entnommen werden oder auf Erfahrungswerten basieren.

Aus dem Prozess des Ausbrennens der Modelle 16, der Verbindungsstege 34 und der Grundkörper 30 aus dem Einbettkörper 18A resultiert eine Negativform 20 der Modelle 16, der Verbindungsstege 34 und der Grundkörper 30. Die Negativform 20 weist somit Kanäle 32 auf, welche negative Abdrücke der Grundkörper 30 sind.

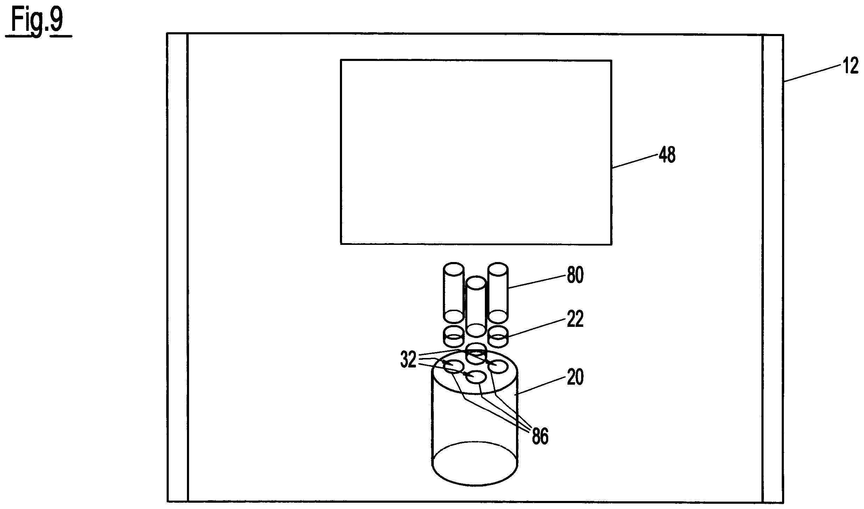

In Fig. 9 ist schematisch gezeigt, wie in die Kanäle 32 der Negativform 20 Pellets 22 eines Rohmaterials eingebracht wird. Es wird bevorzugt dermaßen portioniert, dass es der für das jeweilige Dentalbauteil 10 benötigten Menge entspricht. Die benötigte Menge kann beispielsweise aus dem virtuellen Modell 14 ermittelt werden. Das Rohmaterial kann auch als Pulver, Granulat oder in anderer Form eingebracht werden. Es wird in einem Dentalofen 12 aufgeschmolzen und unter Presskraftbeaufschlagung über die negative Abdrücke der Verbindungsstege 34 (=Verbindungskanäle) in die negativen Abdrücke der Modelle 16 gedrückt, um ein vollständiges und porenfreies Ausfüllen der Abdrücke der Modelle 16 zu gewährleisten. Verbindungskanäle zwischen den Modellen 16 und/oder den Kanälen 32 erleichtern den Austausch von geschmolzenem Rohmaterial innerhalb verschiedener Bereiche der Negativform 20.

Die Presskraft wird von einer den Ofen 12 zugeordneten Presseinrichtung 48 erzeugt und mittels Pressstempel 80 auf das Rohmaterial übertragen. Die Presskraft kann durch eine aktive Bewegung der Stempel 80 und/oder eine Bewegung der Negativform 20 relativ zu den Stempeln 80 erzeugt werden. Die Presskraft kann bis zur vollständigen Aushärtung des erzeugten Dentalbauteils zeitlich konstant oder variabel aufrechterhalten werden. Es ist jedoch ebenfalls möglich, dass die Presskraft beispielsweise nur so lange aufgebracht wird, bis das Rohmaterial 22 vollständig in die Negativform der Modelle 16 eingedrungen ist.

Dem Dentalbrennofen 12 ist eine Steuerungseinrichtung zugeordnet, mit dem sich dieser steuern lässt. Er ist vorzugsweise frei programmierbar. Die Prozessparameter eines Brennprogramms - z.B. Presskraft und Temperatur - werden auf Basis der Eigenschaften des virtuellen Modells 16 und/oder des virtuellen Aufbaus 72 festgelegt. Die Art und/oder die Eigenschaften des verwendeten Rohmaterials können dabei berücksichtigt werden. Es ist z.B. möglich, dass das Bedienpersonal diese Information manuell eingibt und/oder aus einer Datenbank bezieht und sie bei der Planung des virtuellen Modells in dieses integriert. Das virtuelle Modell enthält dann also nicht nur geometrische Informationen, sondern auch Informationen, die das Material charakterisieren. Anhand beispielsweise der Ausgestaltung der zu erzeugenden Dentalbauteile, der benötigten Menge an Rohmaterial 22 und der räumlichen Lage, des Volumens und/oder der Geometrie der negativen Abdrücke der Modelle 16 in der Negativform 20 (auch die Anzahl und Position der Grundkörper 30 kann berücksichtigt werden) kann von der Steuerungseinrichtung automatisch ein Brennprogramm vorgeschlagen werden, welches durch geeignete Prozessparameter, die bei Bedarf auch eine Funktion der Zeit sein können, definiert wird. Beispielsweise wird das Brennprogramm (teilweise) aus geeigneten Parametern der vorhandenen virtuellen Modelle 16 bzw. des virtuellen Aufbaus 72 errechnet oder erzeugt. Es ist auch möglich, dass das Brennprogramm (teilweise) einer Programmbibliothek entnommen wird, wobei bei der Wahl des geeigneten Brennprogramms Parametern der vorhandenen virtuellen Modelle 16 bzw. des virtuellen Aufbaus 72 berücksichtigt werden. Das vorgeschlagene und/oder erzeugte Brennprogramm kann von einem Bedienpersonal bei Bedarf modifiziert werden. Auch eine rein manuelle Festlegung des Brennprogramms ist grundsätzlich denkbar.

Nach dem Aushärten und Abkühlen des Rohmaterials in der Negativform 20 wird die Einbettmasse 18 entfernt. Dies kann manuell erfolgen. Effizienter ist es jedoch, das Ausbetten zumindest teilweise zu automatisieren.

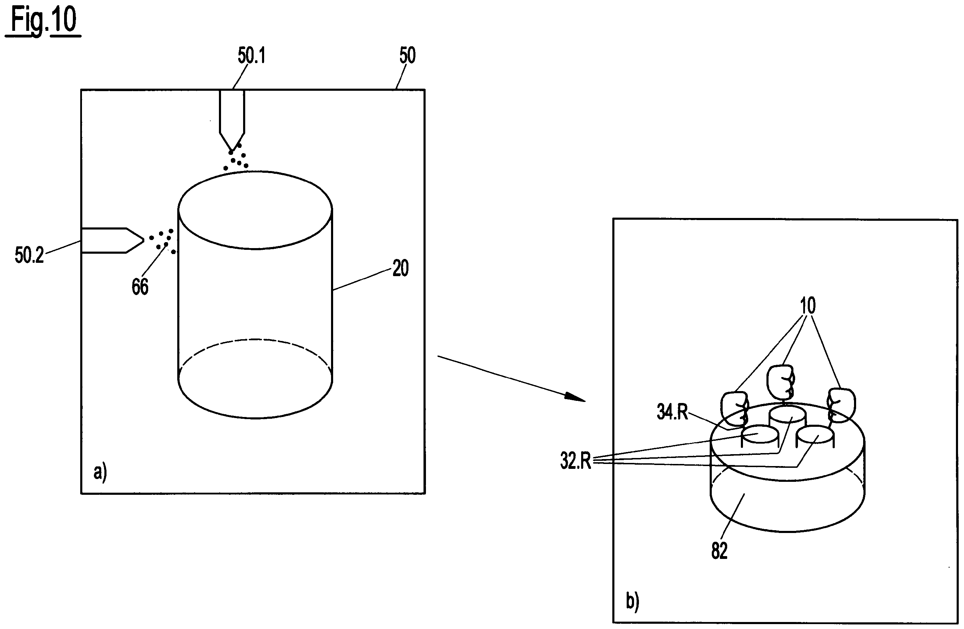

Zu diesem Zweck ist eine Ausbetteinrichtung 50 vorgesehen (siehe Fig. 10a), die die Masse 18 mittels Druckluftstrahlen mit einem festen Strahlmittel (siehe Düsen 50.1, 50.2) oder mittels Wasserstrahlen abträgt. Auch andere abtragende Verfahren, wie etwa Fräsen, und/oder Kombinationen verschiedener Verfahren können zum Einsatz gelangen.

Aufgrund der Daten des virtuellen Aufbaus 72 und durch die wohldefinierte Fixierung des physischen Aufbaus 74 auf der Grundplatte 62 ist die Lage der erzeugten Dentalbauteile in der Form 20 bekannt. Positioniert man nun die Form 20 in bekannter Ausrichtung und Lage in der Ausbetteinrichtung 50, so können die genannten Daten als Grundlage für eine Steuerung der Ausbetteinrichtung 50 dienen. Diese wird so gesteuert, dass die Masse 18 effizient entfernt wird, ohne die Bauteile zu schädigen. Ein Eingriff eines Bedienpersonals bleibt trotzdem möglich, falls es erforderlich sein sollte. Es kann auch vorgesehen sein, dass nur ein grobes Entfernen der Masse 18 automatisiert vorgenommen wird und das endgültige Ausbetten manuell erfolgt. Größere Bereiche des Körpers 18A, in denen keine Bauteile enthalten sind, können auch als ganze Stücke manuell, semiautomatisiert oder automatisiert abgetrennt werden, insbesondere abgeschnitten werden.

Bei dem automatisierten oder semi-automatisierten Ausbetten, können die Art und/oder die Eigenschaften der Einbettmasse 18 berücksichtigt werden. Beispielsweise werden entsprechende Informationen manuell eingegeben oder von einer Datenbank bezogen.

Zur Erleichterung der lagegenauen und reproduzierbaren Positionierung des Aufbaus 74 auf der Grundplatte 62 (oder einer vergleichbaren Basiseinheit) und/oder der Form 20 in der Einrichtung 50 können Markierungen und/oder mechanische Kodierungen vorgesehen sein.

Fig. 10b zeigt das Ergebnis des Ausbettens. Die mittels der Form 20 erzeugten Dentalbauteile 10 sind noch mit dem Rohmaterial (Stege 34.R) verbunden, das in den von den Stegen 34 erzeugten Kanälen ausgehärtet ist und das wiederum mit in den Kanälen 32 ausgehärteten Rohmaterial in Verbindung steht (siehe Bezugszeichen 32.R). Die Komponenten 10, 34.R und 32.R sind ein zumindest teilweises Abbild des physischen Aufbaus 74 (die Grundkörper 30 werden in der Regel nicht vollständig nachgebildet), das in einem Sockel 82 (Rest der Negativform 20) verankert ist. Die Dentalbauteile 10 können nun abgetrennt und bei Bedarf nachbearbeitet werden.

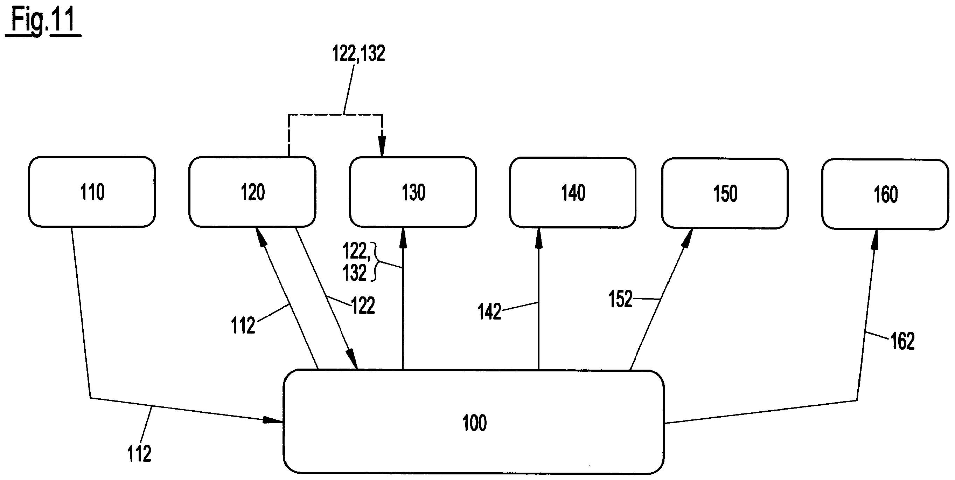

Fig. 11. zeigt ein erfindungsgemäßes System schematisch. Die von einer Rohdatenerfassungseinrichtung 110 (z.B. Scanner 40, siehe Fig. 1) erfassten Rohdaten 112 werden einer Steuerung 100 zugeführt, die eine Steuer- und Regeleinrichtung sein kann. Diese leitet die Rohdaten 112 weiter an ein Modellplanungsmodul 120, das beispielsweise ein Programmmodul ist, das in die Steuerung 100 integriert ist oder das auf einer separaten Rechnereinheit läuft.

Mit Hilfe des Modellerstellungsmoduls 120 wird - automatisch, semi-automatisch oder manuell - auf Basis der Rohdaten 112 ein virtuelles Modell des benötigten Dentalbauteils und/oder eines das Bauteil enthaltenden Aufbaus generiert (siehe z.B. Fig. 2 bis 5). Entsprechende Modelldaten 122 werden über die Steuerung 100 oder direkt (siehe gestrichelter Pfeil) an eine Modellherstellungseinrichtung 130 (z.B. ein 3D-Drucker) übertragen, wo ein physisches Modell oder ein physischer Aufbau des virtuellen Modells bzw. virtuellen Aufbaus erzeugt wird (siehe z.B. Fig. 6). Es ist auch möglich, dass die Modelldaten 122 zunächst in Betriebsparameter 132 und/oder ein entsprechendes Betriebsprogramm für die Einrichtung 130 konvertiert werden. Die Parameter bzw. das Programm 132 können von einem Bedienpersonal an der Einrichtung 130 oder der Steuerung 100 eingegeben werden. Bevorzugt werden die entsprechenden Parameter oder das entsprechende Programm 132 jedoch auf Basis der Modelldaten 122 automatisch erzeugt oder ausgewählt und - falls erforderlich - bei Bedarf von dem Bedienpersonal modifiziert.

Nach dem Einbetten des physischen Modells oder physischen Aufbaus wird der erhaltenen Einbettkörper in einem programmierbaren Ofen 140 (z.B. Ausbrennofen 12A, Fig. 8) ausgebrannt. Die hierfür erforderlich Betriebsparameter 142 und/oder ein entsprechendes Betriebsprogramm können von einem Bedienpersonal an dem Ofen 140 oder der Steuerung 100 eingegeben werden. Bevorzugt werden die entsprechenden Parameter oder das entsprechende Programm 142 jedoch auf Basis der Modelldaten 122 automatisch erzeugt oder ausgewählt (wobei bevorzugt auch die Art und/oder die Eigenschaften des Modellmaterials berücksichtigt werden) und - falls erforderlich - bei Bedarf von dem Bedienpersonal modifiziert.

Der Ausbrennprozess liefert eine Negativform des physischen Modells oder physischen Aufbaus. Die Form wird mit dem Material des Dentalbauteils gefüllt (siehe z.B. Fig. 9) und in einem programmierbaren Dentalofen (z.B. Ofen 12) - optional mit Presseinrichtung - gebrannt. Die hierfür erforderlich Betriebsparameter 152 und/oder ein entsprechendes Betriebsprogramm können von einem Bedienpersonal an dem Ofen 150 oder der Steuerung 100 eingegeben werden. Bevorzugt werden die entsprechenden Parameter oder das entsprechende Programm 152 jedoch auf Basis der Modelldaten 122 automatisch erzeugt oder ausgewählt (wobei bevorzugt auch die Art und/oder die Eigenschaften des Rohmaterials berücksichtigt werden) und - falls erforderlich - bei Bedarf von dem Bedienpersonal modifiziert.

Das in der Negativform erzeugte Bauteil muss nun aus der Einbettmasse entfernt werden. Hierzu ist eine Ausbettvorrichtung 160 vorgesehen (siehe z.B. Ausbetteinrichtung 50, Fig. 10). Das Ausbetten kann grundsätzlich manuell erfolgen. Bevorzugt wird jedoch auch dieser Schritt vollständig oder zumindest teilweise automatisiert durchgeführt (z.B. "grobes" Ausbetten automatisiert, abschließendes "Endausbetten" manuell). Die hierfür erforderlich Betriebsparameter 162 und/oder ein entsprechendes Betriebsprogramm können von einem Bedienpersonal an der Vorrichtung 160 oder der Steuerung 100 eingegeben werden. Bevorzugt werden die entsprechenden Parameter oder das entsprechende Programm 162 jedoch auf Basis der Modelldaten 122 automatisch erzeugt oder ausgewählt (wobei bevorzugt auch die Art und/oder die Eigenschaften des Einbettmaterials berücksichtigt werden) und - falls erforderlich - bei Bedarf von dem Bedienpersonal modifiziert.

Beispielhaft wurde eine einzige Steuerung 100 dargestellt. Es ist aber auch denkbar, zwei oder mehrere Steuereinheiten vorzusehen, die jeweils Teile des Prozesses bzw. eine oder mehrere der vorstehend beschriebenen Funktionseinheiten 110, 120, 130, 140, 150, 160 steuern und/oder regeln. Die Steuereinheiten können auch zwischen einer übergeordneten Steuerung und den Funktionseinheiten geschaltet sein. Der Datenaustausch zwischen der Steuerung bzw. den Steuereinheiten und den Funktionseinheiten und/oder zwischen den Steuereinheiten untereinander und/oder zwischen den Funktionseinheiten untereinander (beispielhaft gezeigt an den Einheiten 120, 130; bei Bedarf können auch die anderen oder einige der anderen Einheiten miteinander in Verbindung stehen) erfolgt vorzugsweise über ein Netzwerk, z.B. über das Internet und/oder über ein lokales Netzwerk (drahtlos und/oder drahtgebunden). Teile des Systems können so räumlich getrennt voneinander angeordnet sein, um Ressourcen optimal zu nutzen.

Ggf. erforderliche Datenformatumwandlungen oder Modifikationen der Daten, z.B. eine Umwandlung von Visualierungsdatensätzen in CAD-Datensätze o.ä., können an beliebiger Stelle im System vorgenommen werden. Gleiches gilt für die automatische oder semi-automatische Erzeugung und/oder Wahl der Modell- bzw. Betriebsparameter oder -daten 122, 132, 142, 152, 162.

Das erfindungsgemäße System bzw. das entsprechende Verfahren basiert auf einer möglichst effizienten Nutzung virtueller Daten, um verschiedene Vorrichtungen, die zur Erzeugung eines Dentalbauteils erforderlich sind, zu steuern. Eingriffe eines Bedienpersonals werden minimiert, was mit Kostenvorteilen einhergeht. Die Vernetzung der Komponenten des Systems erlaubt die räumliche Trennung einzelner Prozessschritte, um jeweils spezifische Standortvorteile ausnutzen zu können. Beispielsweise kann die Planung des Dentalbauteils, also die virtuelle Vorbereitung der eigentlichen Herstellungsschritte, an einem anderen Ort stattfinden, als diese selbst.

### Bezugszeichenliste:

- 10: Dentalbauteil
- 12: Dentalbrennofen
- 12A: Ausbrennofen
- 14: virtuelles Modell
- 16: physisches Modell
- 18: Einbettmasse
- 18A: Einbettkörper
- 20: Negativform
- 22: Rohmaterialpellet
- 26: intraorales Scannen
- 30: physischer Grundkörper
- 30.V: virtueller Grundkörper
- 32: Kanal
- 32.R: ausgehärtetes Rohmaterial in Kanal 32
- 34: physischer Verbindungssteg
- 34.R: Steg aus ausgehärtetem Rohmaterial
- 34.V: virtueller Verbindungssteg
- 40: Scan-Vorrichtung
- 42: physisches Gebiss
- 42.V: virtuelles Gebiss
- 48: Presseinrichtung
- 50: Ausbetteinrichtung
- 50.1, 50.2: Düse
- 56: physisches Zahnfleisch
- 56.V: virtuelles Zahnfleisch
- 58: grafische Benutzeroberfläche
- 60: Symbolleiste
- 62: Grundplatte
- 64: Manschette
- 68: gesunder Zahn
- 70: schadhafter Zahn
- 70.V: virtueller schadhafter Zahn
- 72: virtueller Aufbau
- 74: physischer Aufbau
- 78: Zylinder
- 80: Pressstempel
- 82: Sockel
- 110: Rohdatenerfassungseinrichtung
- 112: Rohdaten
- 120: Modellplanungsmodul
- 122: Modelldaten
- 130: Modellherstellungseinrichtung
- 140, 150: programmierbarer Ofen
- 132, 142, 152, 162: Betriebsparameter, Betriebsprogramm
- 160: Ausbettvorrichtung

## Patentansprüche

1. Verfahren zur Herstellung zumindest eines Dentalbauteils (10), insbesondere eines Zahnersatzes oder -teilersatzes, umfassend folgende Schritte:
(i) additive Fertigung, insbesondere mittels 3D-Druck, eines Modells (16) des Dentalbauteils (10) aus einem Modellmaterial auf Basis eines virtuellen Modells (14, 122) des Dentalbauteils (10), wobei das Modell (16) mit zumindest einem Grundkörper (30) verbunden ist, welcher ausgebildet ist, um in einer Negativform (20) einen Kanal (32) zu formen, in welchem ein Presswerkzeug, insbesondere ein Stempel für einen Pressvorgang geführt werden kann, und
wobei der Grundkörper (30) und ein den Grundkörper (30) und das Modell (16) verbindender Verbindungskanal (34) mittels des additiven Fertigungsverfahrens integral mit dem Modell (16) gefertigt werden,
(ii) Einbetten des Modells (16) in einer Einbettmasse (18),
(iii) Entfernen des Modells (16) aus der Einbettmasse (18), insbesondere durch Erhitzen oder Ausbrennen, um eine Negativform (20) des Modells (16) zu erhalten,
(iv) Einbringen eines zur Herstellung des Dentalbauteils (10) erforderlichen Rohmaterials (22) in die Negativform (20),
(v) Erzeugen des Dentalbauteils (10) in der Negativform (20),
(vi) Entfernen der Negativform (20).

2. Verfahren nach Anspruch 1,
**dadurch gekennzeichnet, dass** zumindest ein Teil von zur Erstellung des virtuellen Modells (14, 122) erforderlichen Daten (112) mittels intraoralem Scannen (26) eines Gebisses (42) eines Patienten oder eines Teils davon erfasst werden.

3. Verfahren nach Anspruch 1 oder 2,
**dadurch gekennzeichnet, dass**
zumindest ein Teil von zur Erstellung des virtuellen Modells (14, 122) erforderlichen Daten mittels Scannen eines Negativabdrucks eines Gebisses (42) eines Patienten oder eines Teils davon oder eines auf Basis des Negativabdrucks gefertigten Modells erfasst werden.

4. Verfahren nach Anspruch 1, 2 oder 3,
**dadurch gekennzeichnet, dass**
zumindest ein Teil von zur Erstellung des virtuellen Modells (14, 122) erforderlichen Daten aus einer Datenbank entnommen werden.

5. Verfahren nach zumindest einem der vorstehenden Ansprüche,
**dadurch gekennzeichnet, dass**
der Grundkörper (30) aus dem Modellmaterial gefertigt ist.

6. Verfahren nach zumindest einem der vorstehenden Ansprüche,
**dadurch gekennzeichnet, dass**
eine Grundplatte (62) zur Aufnahme des Modells (16) und/oder des Grundkörpers (30) mittels des additiven Fertigungsverfahrens integral mit dem Modell (16) und/oder dem Grundkörper (30) gefertigt wird und/oder dass zumindest ein Abschnitt eines zum Einbetten des Modells (16) vorgesehenen Einbettgehäuseteils (64) mittels eines additiven Fertigungsverfahrens integral mit einer Grundplatte (62) zur Aufnahme des Modells (16) und/oder des Grundkörpers (30) gefertigt wird.

7. Verfahren nach zumindest einem der vorstehenden Ansprüche,
**dadurch gekennzeichnet, dass**
mehrere Modelle (16) mehrerer Dentalbauteile (10) gemeinsam additiv gefertigt werden.

8. Verfahren nach zumindest einem der vorstehenden Ansprüche,
**dadurch gekennzeichnet, dass**
die Negativform (20) mit Hilfe zumindest eines abtragenden Fertigungsverfahrens entfernt wird, insbesondere wobei das abtragende Fertigungsverfahren Luftdruckstrahlen und/oder Wasserstrahlen und/oder Fräsen umfasst.

9. Verfahren nach zumindest einem der vorstehenden Ansprüche,
**dadurch gekennzeichnet, dass**
das Dentalbauteil (10) zumindest teilweise automatisiert aus der Negativform (20) gelöst wird.

10. Verfahren nach zumindest einem der vorstehenden Ansprüche,
**dadurch gekennzeichnet, dass**
das Modellmaterial ein rückstandslos verbrennbares Material ist, insbesondere ein Kunststoff, und/oder dass das Modellmaterial ein lichtaushärtender Kunststoff ist und/oder dass das Modellmaterial einen Schmelz-, Siede- oder Sublimationspunkt im Bereich von oberhalb der Raumtemperatur bis 900°C aufweist.

11. Verfahren nach zumindest einem der vorstehenden Ansprüche,
**dadurch gekennzeichnet, dass**
das Einbringen des Rohmaterials (22) in die Negativform (20) und/oder das Erzeugen des Dentalbauteils (10) unter Aufbringen einer Presskraft erfolgt, insbesondere unter Aufbringung einer Presskraft von 10 N bis 1000 N, und/oder in einem Temperaturbereich von 100°C bis 1200°C erfolgt.

12. System zur Herstellung eines Dentalbauteils (10) insbesondere eines Zahnersatzes oder eines -teilersatzes, das dazu eingerichtet und ausgebildet ist, Schritt (i) des Verfahrens gemäß Anspruch 1 auszuführen, umfassend:
- eine Modellherstellungsvorrichtung (130) zur additiven Fertigung eines Modells (16) auf Basis eines virtuellen Modells (14, 122),
- eine Steuerungseinrichtung (100), wobei die Modellherstellungsvorrichtung (130) mit der Steuerungseinrichtung (100) verbindbar oder verbunden ist, um entsprechende Steuerdaten von der Steuerungseinrichtung (100) zu empfangen.

13. System nach Anspruch 12,
**dadurch gekennzeichnet, dass**
die Steuerungseinrichtung (100) dazu ausgebildet und eingerichtet ist, das virtuelle Modell (14, 122) zu empfangen und/oder das virtuelle Modell (14, 122) auf Basis von Daten (112) zumindest eines Scans zu erstellen.

14. System nach Anspruch 12 oder 13,
**dadurch gekennzeichnet, dass**
ein Dentalbrennofen (12) eine Presseinrichtung (48) aufweist, mittels der das Rohmaterial (22) unter Aufbringen einer Presskraft in eine Negativform (20) einbringbar ist und/oder mittels derer das Dentalbauteil (10) unter Aufbringen einer Presskraft erzeugbar bzw. brennbar ist.

15. System nach zumindest einem der Ansprüche 12 bis 14,
**dadurch gekennzeichnet, dass**
die Modellherstellungsvorrichtung (130) eine von der Steuerungseinrichtung (100) separate Steuereinheit aufweist, die mit der Steuerungseinrichtung (100) verbindbar und/oder verbunden ist, insbesondere wobei die Steuerungseinrichtung (100) eine übergeordnete Steuerung bereitstellt.

## Claims

1. A method of manufacturing at least one dental component (10), in particular a dental prosthesis or partial dental prosthesis, comprising the following steps:
(i) additively manufacturing, in particular by means of 3D printing, a model (16) of the dental component (10) from a model material on the basis of a virtual model (14, 122) of the dental component (10), wherein the model (16) is connected to at least one base body (30) which is configured to form a channel (32) in a negative mold (20), in which channel (32) a pressing tool, in particular a punch for a pressing process, can be guided, and
wherein the base body (30) and a connection passage (34) connecting the base body (30) and the model (16) are integrally produced with the model (16) by means of the additive manufacturing process;
(ii) embedding the model (16) in an investment material (18);
(iii) removing the model (16) from the investment material (18), in particular by heating or burning out, to obtain a negative mold (20) of the model (16);
(iv) inserting a raw material (22) required for manufacturing the dental component (10) into the negative mold (20);
(v) producing the dental component (10) in the negative mold (20); and
(vi) removing the negative mold (20).

2. A method in accordance with claim 1,
**characterized in that**
at least a portion of data (112) required for the preparation of the virtual model (14, 122) is acquired by intraorally scanning (26) a dentition (42) of a patient or a part thereof.

3. A method in accordance with claim 1 or claim 2,
**characterized in that**
at least a portion of data required for the preparation of the virtual model (14, 122) is acquired by scanning a negative impression of a dentition (42) of a patient or a part thereof or a model produced on the basis of the negative impression.

4. A method in accordance with claim 1, claim 2, or claim 3,
**characterized in that**
at least a portion of data required for the preparation of the virtual model (14, 122) is taken from a database.

5. A method in accordance with at least one of the preceding claims,
**characterized in that**
the base body (30) is produced from the model material.

6. A method in accordance with at least one of the preceding claims, **characterized in that**
a base plate (62) for receiving the model (16) and/or the base body (30) is integrally produced with the model (16) and/or with the base body (30) by means of the additive manufacturing process; and/or **in that** at least one section of an embedding housing part (64) provided for embedding the model (16) is integrally produced with a base plate (62) for receiving the model (16) and/or the base body (30) by means of an additive manufacturing process.

7. A method in accordance with at least one of the preceding claims, **characterized in that**
a plurality of models (16) of a plurality of dental components (10) are additively manufactured together.

8. A method in accordance with at least one of the preceding claims, **characterized in that**
the negative mold (20) is removed by means of at least one stripping manufacturing process, in particular with the stripping manufacturing process comprising compressed air blasting, and/or water blasting, and/or milling.

9. A method in accordance with at least one of the preceding claims, **characterized in that**
the dental component (10) is released from the negative mold (20) in an at least partly automated manner.

10. A method in accordance with at least one of the preceding claims, **characterized in that**
the model material is a material which is combustible without residue, in particular a plastic, and/or **in that** the model material is a light-curing plastic, and/or **in that** the model material has a melting point, a boiling point, or a sublimation point in a range from above room temperature to 900°C.

11. A method in accordance with at least one of the preceding claims, **characterized in that**
the insertion of the raw material (22) into the negative mold (20) and/or the production of the dental component (10) takes/take place on the application of a pressing force, in particular on the application of a pressing force of 10 N to 1000 N, and/or takes/take place in a temperature range from 100°C to 1200°C.

12. A system for manufacturing a dental component (10), in particular a dental prosthesis or a partial dental prosthesis, which is configured and adapted to perform step (i) of the method in accordance with claim 1, comprising:
- a model manufacturing apparatus (130) for the additive manufacturing of a model (16) on the basis of a virtual model (14, 122); and
- a control device (100), with the model manufacturing apparatus (130) being connectable or connected to the control device (100) to receive corresponding control data from the control device (100).

13. A system in accordance with claim 12,
**characterized in that**
the control device (100) is configured and adapted to receive the virtual model (14, 122) and/or to prepare the virtual model (14, 122) on the basis of data (112) of at least one scan.

14. A system in accordance with claim 12 or claim 13,
**characterized in that**
a dental furnace (12) has a pressing device (48) by means of which the raw material (22) can be inserted into a negative mold (20) on the application of a pressing force and/or by means of which the dental component (10) can be produced or fired on the application of a pressing force.

15. A system in accordance with at least one of the claims 12 to 14, **characterized in that**
the model manufacturing apparatus (130) has a control unit which is separate from the control device (100) and which is connectable and/or connected to the control device (100), in particular with the control device (100) providing a higher-ranking control.

## Revendications

1. Procédé de réalisation d'au moins un composant dentaire (10), en particulier d'une prothèse dentaire ou d'une partie de prothèse dentaire, comprenant les étapes suivantes consistant à :
(i) créer par fabrication additive, en particulier par impression 3D, un modèle (16) du composant dentaire (10) à partir d'un matériau de modèle en se basant sur un modèle virtuel (14, 122) du composant dentaire (10), le modèle (16) étant relié à au moins un corps de base (30) réalisé pour former, dans un moule négatif (20), un canal (32) permettant de guider un outil de pressage, en particulier un poinçon, pour une opération de pressage, et le corps de base (30) et un canal de liaison (34) reliant le corps de base (30) et le modèle (16) étant fabriqués intégralement avec le modèle (16) au moyen du procédé de fabrication additive,
(ii) incorporer le modèle (16) dans une masse d'incorporation (18),
(iii) enlever le modèle (16) hors de la masse d'incorporation (18), en particulier par chauffage ou par cuisson, afin d'obtenir un moule négatif (20) du modèle (16),
(iv) introduire dans le moule négatif (20) une matière brute (22) requise pour la réalisation du composant dentaire (10),
(v) créer le composant dentaire (10) dans le moule négatif (20),
(vi) enlever le moule négatif (20).

2. Procédé selon la revendication 1,
**caractérisé en ce que**
au moins certaines des données (112) requises pour créer le modèle virtuel (14, 122) sont acquises au moyen d'un balayage intra-oral (26) d'une dentition (42) d'un patient ou d'une partie de celle-ci.

3. Procédé selon la revendication 1 ou 2,
**caractérisé en ce que**
au moins certaines des données requises pour créer le modèle virtuel (14, 122) sont acquises au moyen d'un balayage d'une empreinte négative d'une dentition (42) d'un patient ou d'une partie de celle-ci ou d'un modèle fabriqué sur la base de l'empreinte négative.

4. Procédé selon la revendication 1, 2 ou 3,
**caractérisé en ce que**
au moins certaines des données requises pour créer le modèle virtuel (14, 122) sont extraites d'une base de données.

5. Procédé selon l'une au moins des revendications précédentes, **caractérisé en ce que**
le corps de base (30) est fabriqué à partir du matériau du modèle.

6. Procédé selon l'une au moins des revendications précédentes,
**caractérisé en ce que**
une plaque de base (62) destinée à recevoir le modèle (16) et/ou le corps de base (30) est fabriquée intégralement avec le modèle (16) et/ou le corps de base (30) au moyen du procédé de fabrication additive, et/ou
**en ce qu'**au moins une portion d'une partie de boîtier d'incorporation (64) prévue pour incorporer le modèle (16) est fabriquée intégralement avec une plaque de base (62), destinée à recevoir le modèle (16) et/ou le corps de base (30), au moyen d'un procédé de fabrication additive.

7. Procédé selon l'une au moins des revendications précédentes, **caractérisé en ce que**
plusieurs modèles (16) de plusieurs composants dentaires (10) sont fabriqués conjointement par fabrication additive.

8. Procédé selon l'une au moins des revendications précédentes,
**caractérisé en ce que**
le moule négatif (20) est enlevé à l'aide d'au moins un procédé de fabrication par enlèvement de matière, en particulier, le procédé de fabrication par enlèvement de matière comprenant l'usinage par jet d'air comprimé et/ou par jet d'eau et/ou par fraisage.

9. Procédé selon l'une au moins des revendications précédentes,
**caractérisé en ce que**
le composant dentaire (10) est détaché du moule négatif (20) de façon au moins partiellement automatisée.

10. Procédé selon l'une au moins des revendications précédentes,
**caractérisé en ce que**
le matériau du modèle est un matériau combustible sans résidus, en particulier une matière plastique, et/ou
**en ce que** le matériau du modèle est une matière plastique photodurcissable, et/ou
**en ce que** le matériau du modèle présente un point de fusion, d'ébullition ou de sublimation dans la plage allant d'une température, supérieure à la température ambiante, à 900 °C.

11. Procédé selon l'une au moins des revendications précédentes,
**caractérisé en ce que**
l'introduction de la matière brute (22) dans le moule négatif (20) et/ou la création du composant dentaire (10) s'effectue par application d'une force de pressage, en particulier par application d'une force de pressage de 10 N à 1000 N, et/ou s'effectue dans une plage de température de 100 °C à 1200 °C.

12. Système de réalisation d'un composant dentaire (10), en particulier d'une prothèse dentaire ou d'une partie de prothèse dentaire, conçu et réalisé pour effectuer l'étape (i) du procédé selon la revendication 1, comprenant :
- un dispositif de réalisation de modèle (130) pour la fabrication additive d'un modèle (16) sur la base d'un modèle virtuel (14, 122),
- un dispositif de commande (100),
le dispositif de réalisation de modèle (130) pouvant être connecté ou étant connecté au dispositif de commande (100) pour recevoir des données de commande correspondantes provenant du dispositif de commande (100).

13. Système selon la revendication 12,
**caractérisé en ce que**
le dispositif de commande (100) est réalisé et conçu pour recevoir le modèle virtuel (14, 122) et/ou pour créer le modèle virtuel (14, 122) en se basant sur des données (112) d'au moins un balayage.

14. Système selon la revendication 12 ou 13,
**caractérisé en ce que**
un four de cuisson dentaire (12) comprend un dispositif de pressage (48) permettant d'introduire la matière brute (22) dans un moule négatif (20) en appliquant une force de pressage et/ou permettant de créer ou de faire cuire le composant dentaire (10) en appliquant une force de pressage.

15. Système selon l'une au moins des revendications 12 à 14,
**caractérisé en ce que**
le dispositif de réalisation de modèle (130) comprend une unité de commande séparée du dispositif de commande (100), qui peut être connectée et/ou est connectée au dispositif de commande (100), en particulier le dispositif de commande (100) assurant une commande maître.
